# FASCICULE DE BREVET EUROPEEN

(11) **EP 1 056 970 B1**
(45) Date de publication et mention de la délivrance du brevet: **28.09.2005**
(21) Numéro de dépôt: 99956112.9
(22) Date de dépôt: 22.11.1999
(51) Int. Cl.: F16L 47/02, B29C 65/20, B29K 105/06

(54) **PROCEDE DE RACCORDEMENT DE DEUX TUBES EN MATERIAU THERMOPLASTIQUE RENFORCE**
VERFAHREN ZUM VERBINDEN VON ZWEI VERSTÄRKTEN THERMOPLASTISCHEN ROHREN
METHOD FOR CONNECTING TWO REINFORCED THERMOPLASTIC TUBES

(30) Priorité: 27.11.1998 FR 9814987
(43) Date de publication de la demande: 06.12.2000
(73) Titulaire: SAINT-GOBAIN SEVA, 71100 Chalon-sur-Saône (FR)
(72) Inventeur: SABOURAUD, Alain, F-77000 Melun (FR); TOURNIER, Alain, F-54000 Nancy (FR); DERYCKE, Michel, F-57730 Valmont (FR); JOLY, Gérard, F-57150 Creutzwald (FR)
(74) Mandataire: Blot, Philippe Robert Emile
(86) Numéro de dépôt international: PCT/FR1999/002870
(87) Numéro de publication internationale: WO 2000/032978

(56) Documents cités:
- DE-A- 2 049 565
- FR-A- 2 389 483
- FR-A- 2 603 228
- GB-A- 829 179
- GB-A- 2 280 145
- GB-A- 2 319 576
- US-A- 3 865 662
- US-A- 4 257 630
- US-A- 4 709 948
- US-A- 4 800 113
- US-A- 5 364 130
- DATABASE WPI Section Ch, Week 9112 Derwent Publications Ltd., London, GB; Class A35, AN 91-085152 XP002112970 -& JP 62 113998 A (KYUSHU SEKISUI IND), 25 mai 1987 (1987-05-25)

## Description

La présente invention concerne un procédé de raccordement de deux tubes de même diamètre en matériau thermoplastique renforcé.

Les canalisations urbaines de transport de fluides sont réalisées par des tubes de petit diamètre, de l'ordre de 80 à 200 mm. Ceux-ci sont souvent réalisés en matériau thermoplastique renforcé.

Pour assurer la continuité des canalisations, le raccordement étanche de deux extrémités de tels tubes en matériau thermoplastique renforcé doit souvent être effectué directement sur le chantier de pose.

Afin de garantir que la canalisation possède une même résistance aux contraintes extérieures dans la zone de raccordement et dans la partie courante des tubes, il est connu d'utiliser des raccords métalliques afin d'assurer le raccordement de deux extrémités de tubes.

Ces raccords métalliques reprennent mai les contraintes axiales et n'assurent pas un verrouillage efficace de la jonction. Le déboîtement d'une extrémité de tube au niveau du raccord, lors de la mise en pression de la canalisation est assez courant.

D'autres procédés sont décrits dans les documents GB 2 280 145 et US 3,865,662.

L'invention a pour but de proposer un procédé de raccordement de deux tubes en matériau thermoplastique renforcé qui soit simple à mettre en oeuvre, tout en garantissant une résistance satisfaisante de la canalisation dans la région du raccordement, ainsi qu'un verrouillage efficace évitant tout déboîtement lors de contraintes axiales.

A cet effet, l'invention a pour objet un procédé de raccordement de deux tubes de même diamètre en matériau thermoplastique renforcé, où les extrémités des deux tubes sont d'abord soudées bout à bout suivant une soudure périphérique, et, après réalisation de la soudure, une enveloppe externe en matériau thermoplastique est rapportée sur l'essentiel de la longueur de la soudure périphérique en débordant de part et d'autre de la soudure sur les tronçons d'extrémité des deux tubes, et en ce que l'enveloppe externe est chauffée jusqu'à interpénétration de l'enveloppe externe et des tronçons d'extrémité des deux tubes. Un tel procédé est décrit dans GB 2 280 145.

Suivant des modes particuliers de mise en oeuvre, le procédé comporte l'une ou plusieurs des caractéristiques suivantes :
- l'enveloppe externe est pressée radialement et la pression radiale appliquée sur l'enveloppe externe est appliquée jusqu'à ce que les structures de renfort renforçant les deux tubes et l'enveloppe externe viennent en contact lors de l'interpénétration de l'enveloppe externe et des tronçons d'extrémité des deux tubes ;
- l'enveloppe externe comporte une virole tubulaire définissant un contour fermé, enveloppant les tronçons d'extrémité des tubes ;
- l'enveloppe externe comporte une virole fendue longitudinalement, enveloppant les tronçons d'extrémité des tubes ;
- la longueur circonférentielle de la virole est telle, qu'après interpénétration de l'enveloppe et des tronçons d'extrémité des deux tubes, la virole définit un contour fermé autour des deux tubes ;
- l'enveloppe externe et la couche de renforcement comportent des fils co-mêlés comprenant des filaments continus de verre et des filaments continus de matière organique thermoplastique, lesquels fils sont agencés pour former une nappe ;
- la matière organique thermoplastique est du polyéthylène ;
- les fils co-mêlés de filaments continus de verre et de filaments continus de matière organique thermoplastique sont entrecroisés ;
- les fils co-mêlés sont enroulés hélicoïdalement et définissent des angles de sensiblement +55° ou -55° avec l'axe de l'enveloppe externe ;
- les fils co-mêlés définissent des angles de sensiblement 0° et 90° avec l'axe de l'enveloppe externe ;
- les filaments continus de verre et les filaments continus de matière organique thermoplastique sont tissés ;
- la longueur axiale de l'enveloppe externe est comprise entre 0,5 et 3 fois le diamètre des tubes à raccorder ;
- le soudage bout à bout des deux extrémités des tubes est réalisé sans apport de matière, notamment par soudage au miroir ; et
- un manchon de protection est rapporté sur toute la surface de l'envelopoe externe après sa mise en place.

L'invention sera mieux comprise à la lecture de la description qui va suivre, donnée uniquement à titre d'exemple et faite en se référant aux dessins, sur lesquels :
- la figure 1 est une vue en section transversale d'un tube en matériau thermoplastique renforcé, et
- les figures 2 et 3 sont des vues schématiques en coupe iongitudinale de deux tubes devant être raccordés illustrant les premières étapes du procédé de raccordement suivant l'invention.
- la figure 4 est une vue schématique, en coupe longitudinale, à plus grande échelle de la région soudée des deux tubes ; et
- les figures 5, 6 et 7 sont des vues schématiques en coupe longitudinale des deux tubes soudés illustrant les dernières étapes du procédé suivant l'invention.

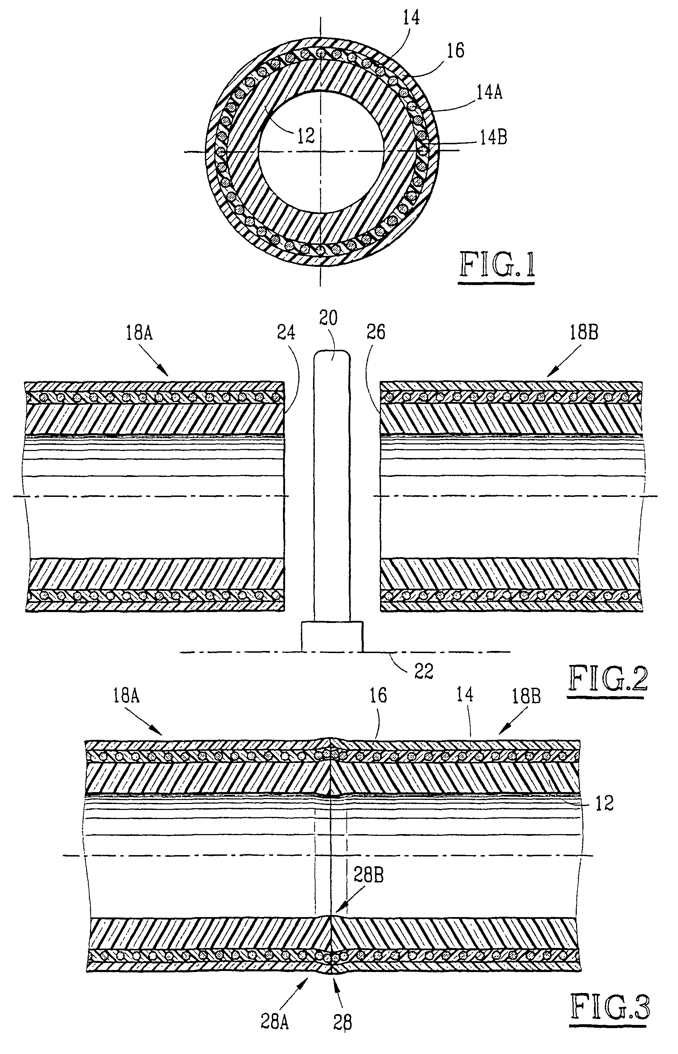

Le tube de transport de fluide représenté sur la figure 1 a, par exemple, un diamètre intérieur de 180 mm. Ce tube est un tube composite réalisé en matériau thermoplastique renforcé.

Il comporte une couche interne 12 extrudée en polyéthylène haute densité. L'épaisseur de la couche interne est par exemple de 8 mm. La couche interne 12 est recouverte d'une couche de renforcement 14 formée à partir de filaments continus de verre et de filaments continus de matière organique thermoplastique, telle que du polyéthylène haute densité de même grade ou de grade différent que celui constituant la couche interne 12.

Pour la réalisation de cette couche, les filaments continus de verre et les filaments continus de matière organique thermoplastique sont associés pour former des fils co-mêlés continus dans lesquels les deux types de filaments sont intimement liés. De tels fils co-mêlés sont obtenus selon un procédé tel que décrit dans les documents EP-0.367.661, WO-98/01751 ou EP-0.599.695. Les fils co-mêlés sont enroulés de manière hélicoïdale en étant entrecroisés. Par rapport à l'axe longitudinal du tube, l'entrecroisement des fils s'effectue avec un angle de plus ou moins 55°, ou encore avec des angles de 0° et 90° par rapport à une génératrice du tube. Les fils co-mêlés ainsi enroulés sont agglomérés par chauffage à une température supérieure à la température de fusion des filaments en matière organique thermoplastique pour former une couche continue dont le taux volumique de vide est avantageusement inférieur à 0,5 %, et de préférence inférieur à 0.2 %.

Les filaments continus de verre notés 14A sont alors noyés dans la matière organique thermoplastique 14B. Les filaments continus de verre entrecroisés renforcent le matériau constituant le tube. L'épaisseur totale de la couche de renforcement 14 est par exemple égale à 2 mm.

La face externe du tube est délimitée par une couche extérieure 16 de polyéthylène haute densité de grade identique ou non au polyéthylène constituant la couche interne 12. La couche externe 16 est co-extrudée. Elle a une faible épaisseur, par exemple égale à 2 mm.

Sur la figure 2, sont représentés deux tronçons de tubes 18A, 18B du type de celui représenté sur la figure 1. Ces tubes sont destinés à être raccordés par le procédé selon l'invention.

A cet effet, les extrémités des deux tubes 18A, 18B sont disposées en regard suivant l'axe commun aux deux tubes.

Les extrémités des tubes sont tout d'abord soudées bout à bout sans apport de matière. Cette soudure est réalisée avantageusement par soudage au miroir.

A cet effet, et comme illustré sur la figure 2, un disque tournant 20 d'axe 22 s'étendant parallèlement à l'axe des deux tubes est interposé entre les faces d'extrémité annulaires 24, 26 des tubes. Les faces 24, 26 sont maintenues en contact avec les deux faces opposées du disque 20 et celui-ci est entraîné en rotation autour de l'axe 22. Les extrémités des tubes en regard sont ainsi chauffées jusqu'à une température suffisante pour les ramollir et amener celles-ci dans un état proche de la fusion.

Le disque 20 est alors retiré et les deux extrémités des tubes 18A, 18B sont rapprochées et pressées axialement l'une contre l'autre. Elles sont ensuite refroidies.

Comme représenté sur la figure 3, les couches intérieure 12, intermédiaire 14 et extérieure 16 des deux tubes 18A, 18B se soudent respectivement les unes aux autres suivant une soudure périphérique 28. Dans la zone de la soudure 28, le tube présente un bourrelet externe 28A et un bourrelet interne 28B résultant du pressage des deux extrémités des tubes alors que leurs extrémités sont ramollies.

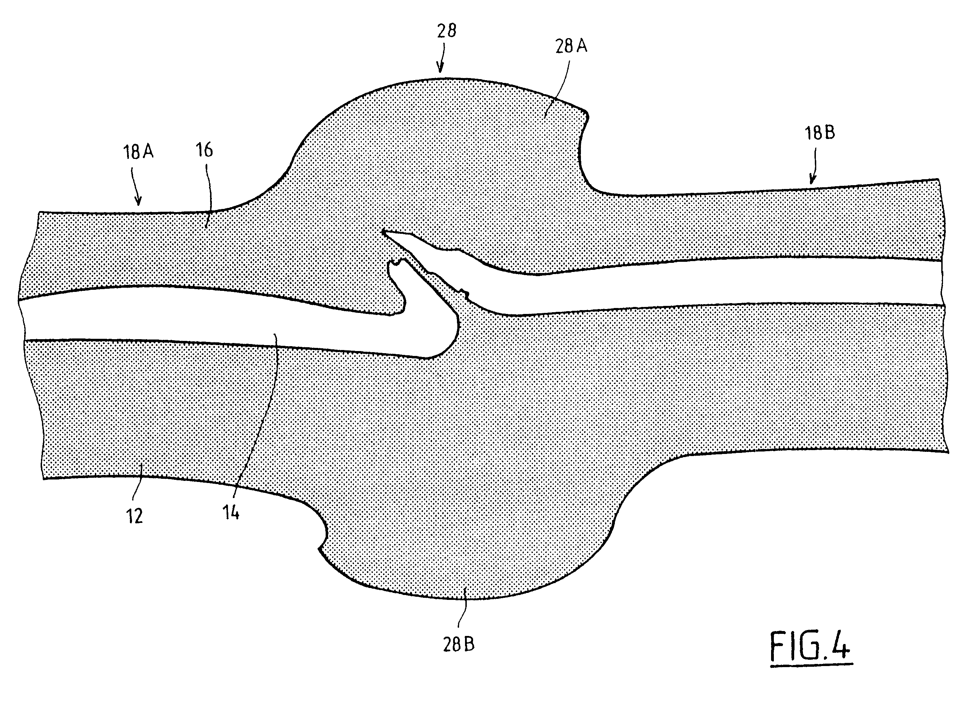

La figure 4 montre l'aspect schématique de la soudure obtenue.

On constate, lors de l'analyse de cette soudure que la jonction est étanche et que les fibres de verre contenues dans la couche de renforcement 14 restent noyées dans le polyéthylène haute densité sans créer de passage pour les liquides. En particulier, les extrémités de la couche de renforcement 14 se recourbent et se chevauchent. Toutefois, elles ne font pas saillie au travers de la fine couche externe 16 dans la région de la soudure 28.

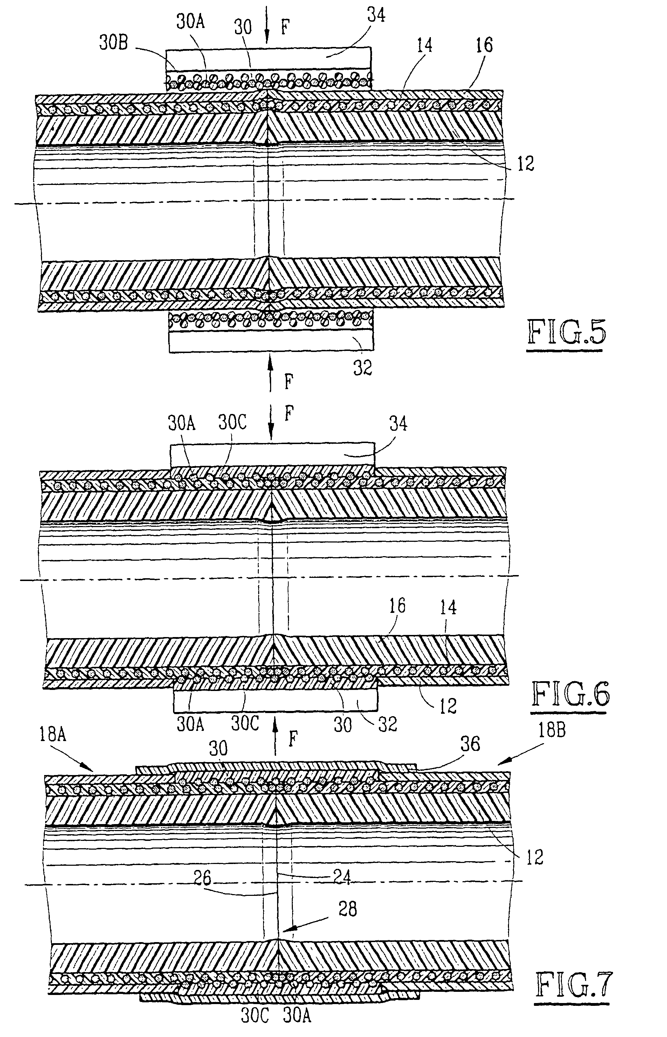

Après réalisation de la soudure 28, et comme représenté sur la figure 5, une enveloppe externe de renfort 30, réalisée dans un matériau thermoplastique renforcé, est rapportée autour de la soudure 28. Sa longueur axiale est suffisante pour que l'enveloppe externe déborde de part et d'autre de la soudure 28 sur les tronçons d'extrémité des tubes assemblés 18A, 18B.

L'enveloppe externe 30 est formée d'une virole fendue longitudinalement enveloppant les deux tronçons d'extrémité des tubes. Cette virole a une longueur axiale comprise entre 0,5 fois et 3 fois le diamètre extérieur des tubes à raccorder.

Initialement, la virole 30 comporte avantageusement des fils co-mêlés formés de filaments continus de verre 30A et de filaments continus 30B de matière organique thermoplastique telle que du polyéthylène haute densité. Ces fils co-mêlés sont assemblés pour former une nappe.

Suivant un premier mode de mise en ceuvre du procédé, dans la virole 30, les fils co-mêlés de filaments continus de verre et de filaments continus de matière organique thermoplastique sont enroulés hélicoïdalement en étant entrecroisés. Les fils sont entrecroisés et forment par exemple un angle compris entre 50 et 55° avec l'axe de la virole 30. Avantageusement, les fils co-mêlés sont entrecroisés avec des angles de 0° et 90° par rapport à l'axe de la virole. Cet agencement assure, après montage de la virole, un renfort axial amélioré. La structure de l'enveloppe externe 30 correspond alors essentiellement à celle de la couche de renforcement 14 des tubes 18A. 18B avant chauffage.

En variante, ces fils sont tissés.

Avantageusement, les fils co-mêlés sont constitués chacun de 800 filaments de verre et de 800 filaments de polyéthylène intimement mélangés. Ces fils co-mêlés sont commercialisés par la société VETROTEX sous la dénomination commerciale TWINTEX. Le rapport en poids est de 60 % de verre et de 40 % de polyéthylène.

Pour l'installation de l'enveloppe 30, deux demi-coquilles chauffantes 32, 34 sont rapportées sur sa face externe. Elles sont destinées à chauffer et presser radialement l'enveloppe externe 30 sur la soudure 28 et sur les tronçons d'extrémité des tubes joints 18A, 18B. Une pression de 1 bar donne les meilleurs résultats.

Les demi-coquilles chauffantes 32, 34 compriment radialement, suivant le sens des flèches F, l'enveloppe externe en chauffant simultanément celle-ci à une température supérieure à la température de fusion de la matière organique thermoplastique formant les filaments 30B. Leur action est maintenue jusqu'à interpénétration de l'enveloppe externe 30 et des tronçons d'extrémité des tubes 18A, 18B, comme représenté sur la figure 6. Le serrage radial et le chauffage sont effectués jusqu'à ce que les filaments 30B fondent et que les filaments de verre 30A et 14A, formant des fibres de renforcement de l'enveloppe externe 30 et de la couche intermédiaire 16, entrent en contact.

Les filaments 30B après fusion forment un matériau cohérent noté 30C dans lequel sont enrobés ou noyés les filaments de verre 30A.

Après le retrait des coquilles chauffantes et refroidissement, les tubes raccordés 18A, 18B présentent une continuité des filaments de verre 30A dans la région de raccordement assurant ainsi le renfort axial et circonférentiel de la canalisation.

La longueur circonférentielle de la virole formant l'enveloppe externe 30 est avantageusement choisie de sorte que, après interpénétration de celle-ci avec les tronçons d'extrémité des deux tubes, les bords longitudinaux en regard de la virole soient adjacents ou se recouvrent partiellement, assurant la continuité circonférentielle de l'enveloppe externe 30.

Afin ce protéger la région de raccordement et notamment toute la surface extérieure de l'enveloppe 30. contre d'éventuelles agressions physico-chimiques des sols, un manchon de protection 36, visible sur la figure 7, est rapporté sur toute la surface de l'enveloppe externe 30. Le manchon de protection 36 est avantageusement réalisé en un matériau thermorétractable tel que du polyéthylène haute densité de grade identique ou différent à celui de la couche interne 12.

Avantageusement, l'enveloppe externe 30 est mise en place et pressée radialement sur le tronçon d'extrémité soudé des tubes joints alors que la soudure 28 est encore chaude.

L'enveloppe externe 30 peut être mise en place à température ambiante et être chauffée simultanément à son pressage radial sur la région de raccordement des deux tubes.

En variante, l'enveloppe externe 30 est chauffée à l'écart des tubes et est mise en place autour de ceux-ci à une température permettant son rétreint radial lors du pressage des deux demi-coquilles.

Suivant une variante, la virole formant l'enveloppe externe est, avant mise en place, un tube définissant un contour fermé.

On conçoit qu'avec un tel procédé, le raccordement réalisé entre les deux tubes a une résistance analogue à celle de la partie courante des tubes, puisque la continuité des filaments de verre assurant le renforcement est assurée sur le tronçon de raccordement.

## Revendications

1. Procédé de raccordement de deux tubes (18A, 18B) de même diamètre en matériau thermoplastique renforcé comprenant une couche de renforcement (14), les extrémités (24,26) des deux tubes (18A, 18B) étant d'abord soudées bout à bout suivant une soudure périphérique (28), et après réalisation de la soudure (28), une enveloppe externe (30) est rapportée sur l'essentiel de la longueur de la soudure périphérique (28) en débordant de part et d'autre de la soudure (28) sur les tronçons d'extrémité des deux tubes (18A, 18B) et l'enveloppe externe (30) est chauffée jusqu'à interpénétration de l'enveloppe externe (30) et des tronçons d'extrémité des deux tubes (18A, 18B),
**caractérisé en ce que** la couche de renforcement (14) est formée à partir de filaments continus de verre et de filaments continus de matière thermoplastique qui sont co-mêlés, que l'enveloppe externe (30) en matériau thermoplastique renforcé comporte des fils co-mêlés comprenant des filaments continus de verre (30A) et des filaments continus (30B) de matière organique thermoplastique, lesquels fils sont agencés pour former une nappe, la structure de l'enveloppe externe (30) correspondant essentiellement à celle de la couche de renforcement (14) des tubes, et **en ce que** l'enveloppe externe (30) est pressée radialement, la pression radiale appliquée sur l'enveloppe externe (30) étant appliquée jusqu'à ce que les structures de renfort (14A, 30A) renforçant les deux tubes (18A, 18B) et l'enveloppe externe (30) viennent en contact lors de l'interpénétration de l'enveloppe externe (30) et des tronçons d'extrémité des deux tubes (18A, 18B).

2. Procédé selon la revendication 1, **caractérisé en ce que** l'enveloppe externe (30) comporte une virole tubulaire définissant un contour fermé, enveloppant les tronçons d'extrémité des tubes (18A, 18B).

3. Procédé selon la revendication 1, **caractérisé en ce que** l'enveloppe externe (30) comporte une virole fendue longitudinalement, enveloppant les tronçons d'extrémité des tubes (18A, 18B).

4. Procédé selon la revendication 3, **caractérisé en ce que** la longueur circonférentielle de la virole (30) est telle, qu'après interpénétration de l'enveloppe (30) et des tronçons d'extrémité des deux tubes (18A, 18B), la virole (30) définit un contour fermé autour des deux tubes (18A, 18B).

5. Procédé selon l'une quelconque des revendications précédentes, **caractérisé en ce que** la matière organique thermoplastique est du polyéthylène.

6. Procédé selon l'une quelconque des revendications précédentes, **caractérisé en ce que** les fils co-mêlés de filaments continus de verre (30A) et de filaments continus (30B) de matière organique thermoplastique sont entrecroisés.

7. Procédé selon la revendication 6, **caractérisé en ce que** les fils co-mêlés sont enroulés hélicoïdalement et définissent des angles de sensiblement +55° ou -55° avec l'axe de l'enveloppe externe (30).

8. Procédé selon la revendication 6, **caractérisé en ce que** les fils co-mêlés définissent des angles de sensiblement 0° et 90° avec l'axe de l'enveloppe externe (30).

9. Procédé selon l'une quelconque des revendications précédentes, **caractérisé en ce que** les filaments continus de verre (30A) et les filaments continus (30B) de matière organique thermoplastique sont tissés.

10. Procédé selon l'une quelconque des revendications précédentes, **caractérisé en ce que** la longueur axiale de l'enveloppe externe (30) est comprise entre 0,5 et 3 fois le diamètre des tubes (18A, 18B) à raccorder.

11. Procédé selon l'une quelconque des revendications précédentes, **caractérisé en ce que** le soudage bout à bout des deux extrémités des tubes (18A, 18B) est réalisé sans apport de matière, notamment par soudage au miroir.

12. Procédé selon l'une quelconque des revendications précédentes, **caractérisé en ce qu'**un manchon de protection (36) est rapporté sur toute la surface de l'enveloppe externe (30) après sa mise en place.

## Patentansprüche

1. Verfahren zum Anschluss von zwei Rohren (18A, 18B) mit gleichem Durchmesser aus verstärktem Thermoplastwerkstoff, die eine Verstärkungsschicht (14) umfassen, wobei die Enden (24, 26) der zwei Rohre (18A, 18B) zuerst mit einer peripheren Schweißung (28) stoßgeschweißt werden und wobei nach dem Herstellen der Schweißung (28) ein äußerer Mantel (30) entlang dem Wesentlichen der Länge der peripheren Schweißung (28) aufgebracht wird und zu beiden Seiten der Schweißung (28) auf den Endabschnitten der zwei Rohre (18A, 18B) übersteht, und der äußere Mantel (30) bis zum gegenseitigen Durchdringen des äußeren Mantels (30) und der Endabschnitte der zwei Rohre (18A, 18B) erhitzt wird, **dadurch gekennzeichnet, dass** die Verstärkungsschicht (14) ausgehend von kontinuierlichen Glasfasern und kontinuierlichen Fasern aus Thermoplastmaterial, die miteinander vermischt sind, gebildet wird, dass der äußere Mantel (30) aus verstärktem Thermoplastwerkstoff miteinander vermischte Fäden umfasst, die kontinuierliche Glasfasern (30A) und kontinuierliche Fasern (30B) aus organischem Thermoplastmaterial umfassen, wobei die Fäden eingerichtet sind, um eine Schicht zu bilden, wobei die Struktur des äußeren Mantels (30) im Wesentlichen der der Verstärkungsschicht (14) der Rohre entspricht, und **dadurch**, dass der äußere Mantel (30) radial zusammengedrückt wird, wobei der radiale Druck, der auf den äußeren Mantel (30) angelegt wird, angelegt wird, bis die Verstärkungsstrukturen (14A, 30A), die die zwei Rohre (18A, 18B) verstärken, und der äußere Mantel (30) beim gegenseitigen Durchdringen des äußeren Mantels (30) und der Endabschnitte der zwei Rohre (18A, 18B) in Berührung kommen.

2. Verfahren nach Anspruch 1, **dadurch gekennzeichnet, dass** der äußere Mantel (30) einen röhrenförmigen Mantelschuss umfasst, der eine geschlossene Kontur bildet, welche die Endabschnitte der Rohre (18A, 18B) umgibt.

3. Verfahren nach Anspruch 1, **dadurch gekennzeichnet, dass** der äußere Mantel (30) einen längs geschlitzten Mantelschuss umfasst, der die Endabschnitte der Rohre (18A, 18B) umgibt.

4. Verfahren nach Anspruch 3, **dadurch gekennzeichnet, dass** die Umkreislänge des Mantels (30) derart ist, dass der Mantel (30) nach dem gegenseitigen Durchdringen des Mantels (30) und der Endabschnitte der zwei Rohre (18A, 18B) eine geschlossene Kontur um die zwei Rohre (18A, 18B) bildet.

5. Verfahren nach einem der vorhergehenden Ansprüche, **dadurch gekennzeichnet, dass** das organische Thermoplastmaterial Polyethylen ist.

6. Verfahren nach einem der vorhergehenden Ansprüche, **dadurch gekennzeichnet, dass** die miteinander vermischten Fäden der kontinuierlichen Glasfasern (30A) und der kontinuierlichen Fasern (30B) aus organischem Thermoplastmaterial verkreuzt sind.

7. Verfahren nach Anspruch 6, **dadurch gekennzeichnet, dass** die miteinander vermischten Fäden schraubenförmig aufgewickelt sind und Winkel von im Wesentlichen +55° oder -55° zu der Achse des äußeren Mantels (30) bilden.

8. Verfahren nach Anspruch 6, **dadurch gekennzeichnet, dass** die miteinander vermischten Fäden Winkel von im Wesentlichen 0° und 90° zu der Achse des äußeren Mantels (30) definieren.

9. Verfahren nach einem der vorhergehenden Ansprüche, **dadurch gekennzeichnet, dass** die kontinuierlichen Glasfasern (30A) und die kontinuierlichen Fasern (30B) aus organischem Thermoplastmaterial gewebt sind.

10. Verfahren nach einem der vorhergehenden Ansprüche, **dadurch gekennzeichnet, dass** die axiale Länge des äußeren Mantels (30) zwischen dem 0,5- und 3-Fachen des Durchmessers der anzuschließenden Rohre (18A, 18B) liegt.

11. Verfahren nach einem der vorhergehenden Ansprüche, **dadurch gekennzeichnet, dass** das Stoßschweißen der zwei Enden der Rohre (18A, 18B) ohne Hinzufügen von Materialauftrag durchgeführt wird, insbesondere durch Spiegelschweißen.

12. Verfahren nach einem der vorhergehenden Ansprüche, **dadurch gekennzeichnet, dass** eine Schutzmuffe (36) auf die ganze Oberfläche des äußeren Mantels (30) nach deren Anbringen aufgebracht wird.

## Claims

1. A method of connecting two reinforced thermoplastic material tubes (18A, 18B) of the same diameter and comprising a reinforcement layer (14), the ends (24, 26) of the two tubes (18A, 18B) being first butt-welded along a peripheral weld (28), after which an external envelope (30) is fitted over the greater part of the length of the peripheral weld (28), projecting to either side of the weld (28) over the end sections of the two tubes (18A, 18B), and the external envelope (30) is heated until interpenetration of the external envelope (30) and the end sections of the two tubes (18A, 18B) occurs, **characterised in that** the reinforcing layer (14) is formed from continuous filaments of glass and continuous filaments of thermoplastic material that are intermingled, the reinforced thermoplastic material external envelope (30) includes intermingled threads comprising continuous glass filaments (30A) and continuous organic thermoplastic material filaments (30B), which threads are arranged to form a layer, the structure of the external envelope (30) corresponding essentially to that of the reinforcing layer (14) of the tubes, and the external envelope (30) is compressed radially, radial pressure being applied to the external envelope (30) until the reinforcing structures (14A, 30A) reinforcing the two tubes (18A, 18B) and the external envelope (30) come into contact upon interpenetration of the external envelope (30) and the end sections of the two tubes (18A, 18B).

2. Method according to claim 1, **characterised in that** the external envelope (30) comprises a tubular collar having a closed contour and enveloping the end sections of the tubes (18A, 18B).

3. Method according to claim 1, **characterised in that** the external envelope (30) comprises a longitudinally slit collar enveloping the end sections of the tubes (18A, 18B).

4. Method according to claim 3, **characterised in that** the circumference of the collar (30) is such that, after interpenetration of the envelope (30) and the end sections of the two tubes (18A, 18B), the collar (30) defines a closed contour around the two tubes (18A, 18B).

5. Method according to any one of the preceding claims, **characterised in that** the organic thermoplastic material is polyethylene.

6. Method according to any one of the preceding claims, **characterised in that** the intermingled threads of continuous glass filaments (30A) and continuous organic thermoplastic material filaments (30B) cross over each other.

7. Method according to claim 6, **characterised in that** the intermingled threads are wound helicoidally at an angle of substantially +55° or -55° to the axis of the external envelope (30).

8. Method according to claim 6, **characterised in that** the intermingled threads are at angles of substantially 0° and 90° to the axis of the external envelope (30).

9. Method according to any one of the preceding claims, **characterised in that** the continuous glass filaments (30A) and the continuous organic thermoplastic material filaments (30B) are woven together.

10. Method according to any one of the preceding claims, **characterised in that** the axial length of the external envelope (30) is from 0.5 to 3 times the diameter of the tubes (18A, 18B) to be connected.

11. Method according to any one of the preceding claims, **characterised in that** the two ends of the tubes (18A, 18B) are butt welded with no additional material, in particular by the mirror welding process.

12. Method according to any one of the preceding claims, **characterised in that** a protective sleeve (36) is fitted over the whole of the surface of the external envelope (30) after the latter is fitted.
